# EUROPÄISCHE PATENTANMELDUNG

(11) **EP 0 884 569 A1**
(43) Veröffentlichungstag der Anmeldung: **16.12.1998**
(21) Anmeldenummer: 98810489.9
(22) Anmeldetag: 25.05.1998
(51) Int. Cl.: G01K 17/06

(54) **Verfahren und Gerätschaft zur Verbrauchsermittlung**

(30) Priorität: 13.06.1997 CH 1448/97
(71) Anmelder: Bernina Electronic AG, 8266 Steckborn (CH)
(72) Erfinder: Hausammann, Erich, 8272 Ermatingen (CH)
(74) Vertreter: AMMANN PATENTANWÄLTE AG BERN AMMANN INGENIEURS-CONSEILS EN PROPRIETE INTELLECTUELLE SA BERNE AMMANN PATENT ATTORNEYS LTD BERNE

(57) **Zusammenfassung**

Die Übermittlung von Verbrauchsdaten vom Verbraucher an eine Abrechnungszentrale erfolgt vollautomatisch über ein Telefonnetz, wobei die Daten mittels einer Chipkarte (6) ausgelesen und die Übermittlung der Daten durch Einführen der Chipkarte in ein Interface (5) ausgeführt wird. Auch das Abrufen der Verbrauchsdaten aus abgespeicherten Ablesedaten kann vollautomatisch erfolgen, indem über ein Telefonnetz eine mit jeder Verbrauchsstelle verbundene Messeinheit (7) aufgerufen und aktiviert wird, um die in der Messeinheit abgespeicherten Verbrauchsdaten an die Abrechnungszentrale zu übermitteln.

## Beschreibung

Die vorliegende Erfindung betrifft ein Verfahren zur Verbrauchsermittlung von Verbrauchern bzw. Verbrauchsstellen gemäss Oberbegriff des Anspruchs 1. Als Verbraucher oder Verbrauchsstelle gelten hierbei Personen, Firmen oder sonstige Körperschaften, die irgend ein Gut verbrauchen bzw. Beziehen, insbesondere Energie wie Wärme, Elektrizität oder Brennstoff, und als Verbrauchsstellen gelten insbesondere Geräte wie die Heizkörper einer Wohnung oder eines Büros oder andere Heizvorrichtungen. Ein derartiges Verfahren zur Verbrauchsermittlung ist aus EP-A-0 499 583 bekannt. Dieses bekannte Verfahren wird insbesondere zur sogenannten Heizkostenabrechnung eingesetzt, und es bietet den Vorteil, dass zur Erfassung der Verbrauchsdaten kein Personal der Abrechnungsstelle die Wohnung oder das Büro des Verbrauchers zu betreten braucht, da der Verbraucher selbst die Daten erfassen und übermitteln kann. Es ist also überhaupt kein Personal der Verrechnungsstelle für die Verbrauchsermittlung erforderlich. Immerhin ist es aber noch erforderlich, dass der Verbraucher im richtigen Zeitpunkt die Verbrauchsdaten erfasst und für deren Übermittlung an eine Verrechnungsstelle besorgt ist, indem er entweder ein Lesegerät oder einen Datenträger an die Verrechnungsstelle sendet oder aber die Verrechnungsstelle anruft und die Verbrauchsdaten telefonisch übermittelt.

Ziel vorliegender Erfindung ist es, die Datenerfassung weiter zu vereinfachen, im besten Falle so weit, dass der Verbraucher, also beispielsweise der Wohnungs- oder Büromieter mit der Verbrauchserfassung überhaupt nichts mehr zu tun hat, dies selbstverständlich verbunden mit dem schon bestehenden Vorteil, dass auch kein Personal der Abrechnungsstelle für die eigentliche Datenerfassung tätig zu werden braucht. Dieses Ziel wird gemäss dem Kennzeichen des Anspruchs 1 bzw. mit einer Gerätschaft gemäss Anspruch 5 erreicht.

Im folgenden wird die Erfindung anhand zweier Ausführungsbeispiele erläutert. In der Zeichnung zeigen:
- Figur 1: ein Blockschema der Geräte bei einem Verbraucher, beispielsweise einem Wohnungsinhaber,
- Figur 2: ein Blockschema der Gerätschaft an der zugeordneten Verrechnungsstelle oder Abrechnungszentrale,
- Figur 3: ein Blockschema einer Messeinheit einer zweiten Ausführungsform und
- Figur 4: ein Blockschema der Verrechnungsstelle oder Abrechnungszentrale der zweiten Ausführungsform.

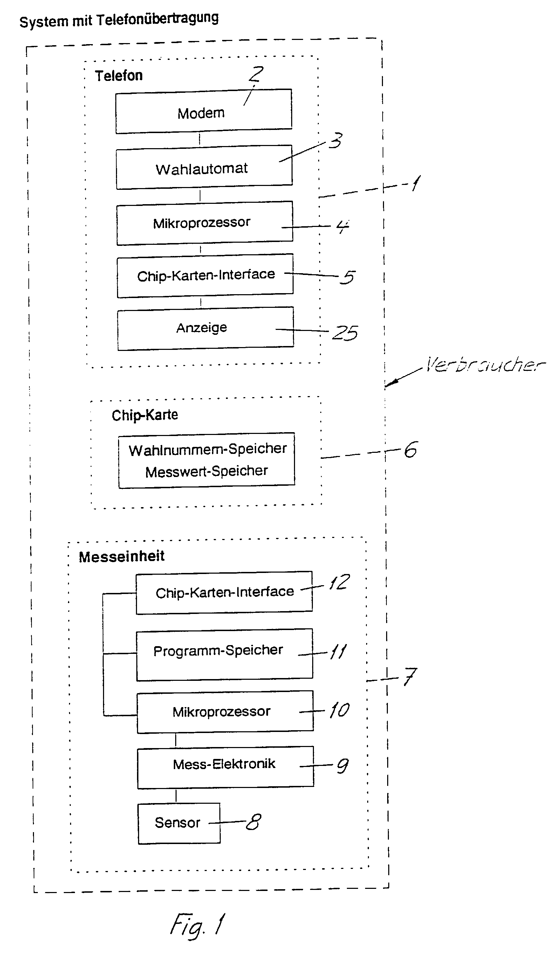

Figur 1 zeigt die erfindungswesentlichen Geräteteile bei einem Verbraucher, beispielsweise einem Wohnungs- oder Büromieter, für den eine Heizkostenabrechnung zu erstellen ist. Es wird vorausgesetzt, dass der Verbraucher einen Telefonapparat 1 besitzt. Mit diesem Telefonapparat ist ein Modem 2 verbunden, welchem ein Wahlautomat 3, ein Mikroprozessor 4 und ein Chipkarten-Interface 5 zugeordnet sind. Die Gerätschaft umfasst im weiteren eine Chipkarte 6 mit einem Wahlnummernspeicher und einem Messwertspeicher. An jeder Verbrauchsstelle, also beispielsweise an jedem Heizkörper des Wohnungs- oder Büromieters, befindet sich eine Messeinheit 7 mit einem Sensor 8 zur Erfassung der Heizkörpertemperatur, einer zugeordneten Messelektronik 9 zur Berechnung und Integration des Verbrauchs, einem Mikroprozessor 10, einem Programmspeicher 11 und einen Chipkarten-Interface 12. Zur Erfassung und Übermittlung der Verbrauchsdaten am Ende einer Erfassungsperiode wird die Chipkarte 6 in die Chipkarten-Interfaces 12 der vorhandenen Messeinheiten eingeführt, wobei die Messwerte addiert und im Messwertspeicher der Chipkarte abgelegt werden. Zur Art der betrugs- und irrtumssicheren Ablesung der Verbrauchsdaten wird auf die oben genannte EP-A-0 499 583 verwiesen. Sind in diesem Sinne alle Verbrauchsdaten erfasst, wird die Chipkarte in das Chipkarten-Interface 5 beim Telefonapparat eingeführt, womit automatisch dem Wahlnummernspeicher der Chipkarte die Wahlnummer der Abrechnungszentrale entnommen und mittels des Wahlautomats 3 die Abrechnungszentrale angerufen wird. Nach Erstellung der Telefonverbindung werden die Messwerte aus der Chipkarte ausgelesen und telefonisch an die Abrechnungszentrale übermittelt.

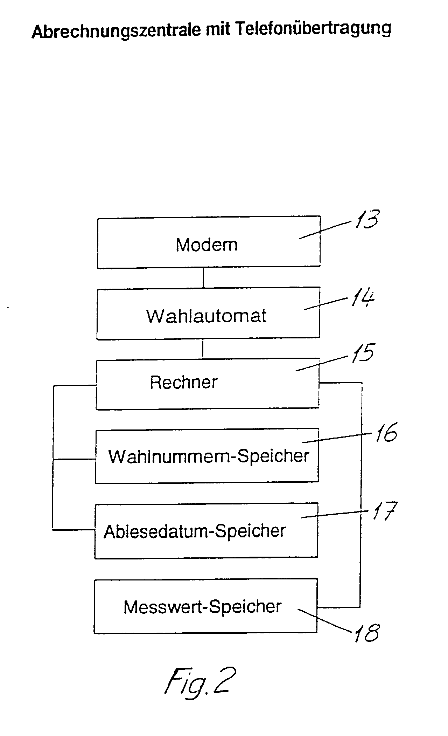

Figur 2 zeigt die Organisation der Abrechnungszentrale mit einem Modem 13, einem Wahlautomaten 14, einem Rechner 15, einem Wahlnummernspeicher 16, einem Ablesedatumspeicher 17 und einem Messwertspeicher 18. Die gemäss obenstehendem Übermittelten Verbrauchswerte werden im Rechner 15 verarbeitet und im Messwertspeicher 18 abgelegt und können dann der Erstellung der Heizkostenabrechnung dienen. Mit Hilfe des Ablesedatumsspeichers 17 des Wahlnummernspeichers 16 und des Wahlautomaten 14 werden die Verbraucher automatisch zur Erfassung der Verbrauchswerte aufgerufen. Dem Telefonapparat des Verbrauchers kann ausser den Geräteteilen 2 bis 5 eine optische Anzeige zugeordnet sein, die nach dem Aufruf durch die Abrechnungszentrale aktiviert bleibt, bis die Chipkarte 6 zur Übermittlung der Messdaten in das Chipkarten-Interface 5 eingeführt wird. In einer weiteren Ausbildung könnte durch die Abrechnungszentrale nach dem Empfang und der Überprüfung der Verbrauchsdaten eine Quittung an den Verbraucher übermittelt werden, welche ebenfalls angezeigt wird. Auch zur soeben erwähnten Überprüfung der ermittelten Verbrauchsdaten wird auf EP-A-0 499 583 verwiesen.

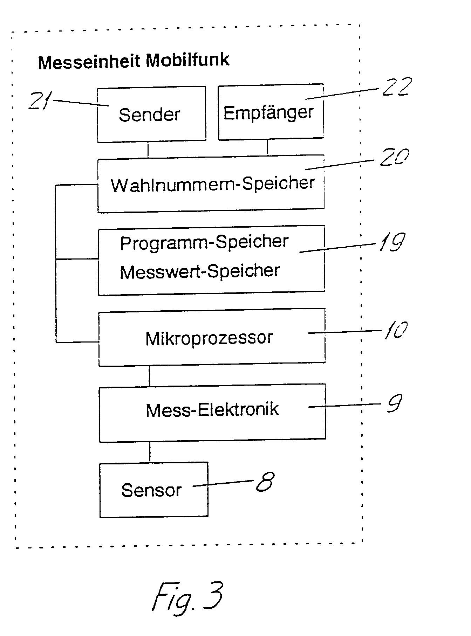

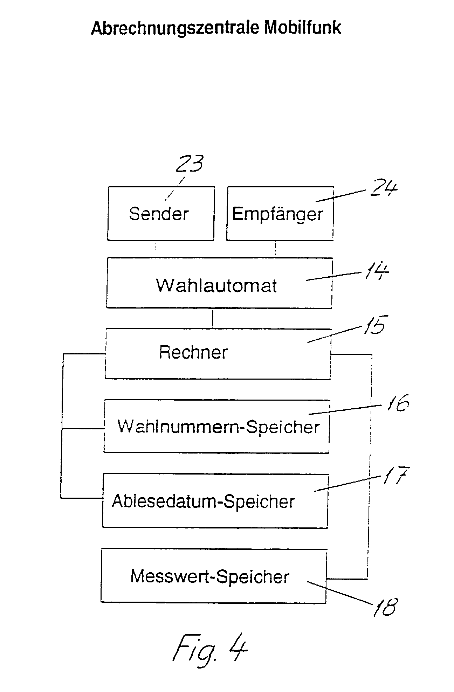

Die Figuren 3 und 4 zeigen eine weitere Ausführungsform der erfindungsgemässen Gerätschaft. Bei dieser Ausführung wird jede Verbrauchsstelle, also beispielsweise jeder Heizkörper einer Wohnung oder eines Büros mit einer Messeinheit gemäss Figur 3 versehen. Entsprechende Teile sind gleich bezeichnet wie in den Figuren 1 und 2. Jede Messeinheit umfasst einen Sensor 8, eine Messelektronik 9 und einen Mikroprozessor 10. Ferner ist ein kombinierter Programmspeicher und Messwertspeicher 19, ein Wahlnummernspeicher 20, ein Sender 21 und ein Empfänger 22 vorgesehen. Die Abrechnungszentrale ist ähnlich aufgebaut, wie diejenige nach Figur 2, nämlich mit einem Messwertspeicher 18, einem Ablesedatumsspeicher 17, einem Wahlnummernspeicher 16, einem Rechner 15 und einem Wahlautomaten 14. Ferner sind ein Sender 23 und ein Empfänger 24 vorgesehen. Die Sender 21 und 23 sowie die Empfänger 22 und 24 entsprechen bezüglich Frequenzen und Leistung den Sendern und Empfängern eines Mobiltelefons oder -Funks, d. h. in jedem Fall ist eine direkte drahtlose Verbindung zwischen jeder Messeinheit und der Abrechnungszentrale möglich. Dementsprechend wird nun also jede Verbrauchsstelle, also beispielsweise jeder Heizkörper einer Wohnung, mit einer Messeinheit gemäss Figur 3 versehen, und diese Messeinheit steht in direkter Verbindung mit der Abrechnungszentrale. Natürlich handelt es sich nicht um eine Dauerverbindung, sondern die Verbindung wird nur zum Zwecke der Übermittlung der Verbrauchsdaten aufgebaut. Im Ablesedatumsspeicher 17 sind Ablesedaten gespeichert und anhand von Wahlnummern aus dem Speicher 16 wird jede einzelne Messeinheit zu bestimmten Zeitpunkten aufgerufen und zur Übermittlung der in Speicher 19 enthaltenen Verbrauchsdaten aktiviert. Die übermittelten Daten werden geprüft und abgespeichert, sofern die Prüfung keine Mängel ergeben hat.

Bei dieser Ausführung gemäss Figuren 3 und 4 wird nun jede Aktivität entweder des Verbrauchers, beispielsweise des Wohnungsmieters oder eines Beauftragten der Verrechnungsstelle überflüssig, da die Erfassung der Verbrauchsdaten vollautomatisch erfolgt. Es ist jedoch auch ohne weiteres die Möglichkeit gegeben, in diese Automatik einzugreifen, sowohl bei der Ausführung nach den Figuren 1 und 2 als auch bei der Ausführung nach Figuren 3 und 4, indem z. B. bei Mieterwechsel willkürlich eine Ablesung veranlasst und durchgeführt werden kann.

Es sind weitere zusätzliche oder alternative Massnahmen möglich. So kann beispielsweise die Speicherung einer Wahlnummer auf der Chipkarte 6 nach Figur 1 wegfallen und diese Wahlnummer könnte direkt im Wahlautomaten abgespeichert sein, da ja immer die selbe Abrechnungszentrale anzurufen ist. Bei der Ausführung gemäss Figuren 3 und 4 könnte gegebenenfalls der Wahlnummernspeicher 20 in den Messeinheiten wegfallen, indem die Wahlnummer der Abrechnungszentrale mit dem Aufruf zur Übermittlung der Messdaten an jede Messeinheit übermittelt, dort vorübergehend abgespeichert und zur Übermittlung der Daten verwendet wird.

Von besonderer Bedeutung für die Vereinfachung der Verbrauchserfassung ist die in jedem Falle vorhandene automatische Vorgabe des Zeitpunkts der Datenübermittlung. Bei der Ausführung gemäss Figuren 1 und 2 muss zwar der Verbraucher noch an die Fälligkeit der Übermittlung erinnert werden, und er muss auch noch die Daten erfassen, aber die Erinnerung erfolgt vollautomatisch und dasselbe gilt für die Datenübermittlung.

Während die Erfindung oben vorwiegend anhand der Erfassung des Wärmeverbrauchs erläutert wurde, können mit Vorteil andere Verbrauchsdaten erfasst werden, insbesondere dort, wo es üblich ist Verbrauchszähler mehrmals jährlich durch Personal abzulesen. Das trifft insbesondere zu für den Verbrauch von Elektrizität, Wasser und Gas.

## Patentansprüche

1. Verfahren zur Verbrauchsermittlung von Verbrauchern bzw. Verbrauchsstellen, z. B. Heizkörpern, wobei Daten mindestens eines Verbrauchs zählers ausgelesen und an eine Abrechnungszentrale (Fig. 2, Fig. 4) übermittelt werden, dadurch gekennzeichnet, dass
(a) die Daten mittels einer Chipkarte (6) ausgelesen und die Übermittlung der Daten durch Einführen der Chipkarte in ein Chip-Karten-Interface (5) ausgeführt wird, und
(b) die Übermittlung der Daten mittels einer lokal gespeicherten Rufnummer über ein Telefonnetz automatisch erfolgt.

2. Verfahren nach Anspruch 1, dadurch gekennzeichnet, dass Verbrauchsstellen mit je einem Sender (21) versehen und die Daten durch die Sender an die Abrechnungszentrale übermittelt werden, wobei die Übermittlung durch ein empfangenes Abfragesignal angeregt wird.

3. Verfahren nach einem der Ansprüche 1 oder 2, dadurch gekennzeichnet, dass über die erfolgte Übermittlung und Überprüfung der Daten durch die Abrechnungszentrale eine Rückmeldung erfolgt, mit welcher auch die übermittelten Daten gelöscht werden können.

4. Verfahren nach Anspruch 1, dadurch gekennzeichnet, dass Zeitpunkte für die Ablesung bzw. Übermittlung der Verbrauchsdaten abgespeichert und die Ablesung bzw. Übermittlung zu diesen Zeitpunkten automatisch veranlasst wird.

5. Gerätschaft zur Verbrauchsermittlung gemäss dem Verfahren nach Anspruch 1, dadurch gekennzeichnet, dass sie folgende Komponenten enthält
(a) ein Messgerät (7) welches an einer oder mehreren Verbrauchsstelle(n) vorhanden ist, und welches ein Chipkarte-Interface aufweist,
(b) eine Chipkarte(6) zum Auslesen der Daten aus einem solchen Messgerät (7),
(c) ein Übermittlungsgerät (2 - 5) zum Auslesen der Daten aus der Chipkarte und zur telefonischen Übermittlung der Daten an die Abrechnungszentrale, und
(d) Mittel (2 - 6; 19 - 22), welche in einer oder mehreren Verbrauchsstelle(n) und/oder in der Abrechnungszentrale vorhanden sind, und welche zur selbsttätigen Übermittlung der ermittelten Daten an die Abrechnungszentrale geeignet sind.

6. Gerätschaft nach Anspruch 5, dadurch gekennzeichnet, dass an einer oder mehreren Verbrauchsstelle(n) Mittel (3, 6) vorhanden sind, die eine automatischen Übermittlung der Daten von den Messgeräten (7) an die Abrechnungszentrale ermöglichen.

7. Gerätschaft nach Anspruch 5, dadurch gekennzeichnet, dass die Abrechnungszentrale Mittel(14, 16) zum automatischen Abrufen der Daten aus den Messgeräten (7) enthält.

8. Gerätschaft nach Anspruch 5, dadurch gekennzeichnet, dass die Chipkarte (6) einen Wahlnummernspeicher enthält.

9. Gerätschaft nach einem der Ansprüche 5 bis 8, gekennzeichnet durch einen Ablesedatumsspeicher (17), der zur automatischen Veranlassung des Auslesens und/oder Übermittlung der Verbrauchsdaten auslesbar ist.

10. Gerätschaft nach Anspruch 5 bis 9, dadurch gekennzeichnet, dass jedem Messgerät ein Sender (21) oder Sender/Empfänger (21, 22) zugeordnet ist, der mit einem Empfänger (24) bzw. Sender/Empfänger (23, 24) der Abrechnungszentrale zur direkten, automatischen Datumsübermittlung in Verbindung steht.

11. Gerätschaft nach Anspruch 10, dadurch gekennzeichnet, dass das Messgerät einen Rufnummernspeicher (20) zur Übermittlung der Daten aufweist.

12. Gerätschaft nach Anspruch 10, dadurch gekennzeichnet, dass die Abrechnungszentrale einen Adressenspeicher bzw. Wahlnummernspeicher (16) zum Abrufen der Messgeräte sowie einen Datumsspeicher (17) zum automatischen Auslösen der Abfragen aufweist.

13. Gerätschaft nach Anspruch 11, dadurch gekennzeichnet, dass die Abrechnungszentrale mit dem Abfragesignal die eigene Rufnummer übermittelt, wobei das Messgerät diese Rufnummer speichern und zur Übermittlung der Daten benutzen kann.
